Europäisches Patentamt

(19) European Patent Office

Office européen des brevets

(11) EP 0 662 397 B1

## (12) EUROPEAN PATENT SPECIFICATION

(45) Date of publication and mention
of the grant of the patent:
**05.03.1997 Bulletin 1997/10**

(51) Int. Cl.⁶: **B60C 11/03**, B60C 11/04

(21) Application number: **94309586.9**

(22) Date of filing: **20.12.1994**

(54) **Pneumatic tyre**

Luftreifen

Bandage pneumatique

(84) Designated Contracting States:
**DE FR GB IT**

(30) Priority: **27.12.1993 JP 350821/93**

(43) Date of publication of application:
**12.07.1995 Bulletin 1995/28**

(73) Proprietor: **Sumitomo Rubber Industries Ltd.
Kobe-shi, Hyogo-ken (JP)**

(72) Inventor: **Tanaka, Masatoshi
Takarazuka-shi, Hyogo-ken (JP)**

(74) Representative: **Stewart, Charles Geoffrey
SP TYRES UK LIMITED
Technical Division
Fort Dunlop, Erdington, Birmingham B24 9QT
(GB)**

(56) References cited:
**EP-A- 0 428 472            EP-A- 0 593 288
FR-A- 2 484 336            US-A- 4 044 810
US-A- 4 479 525            US-A- 5 372 171**

EP 0 662 397 B1

## Description

The present invention relates to a pneumatic tyre, particularly a low aspect radial tyre for passenger vehicles, capable of providing higher wet grip performance and reduction of tyre noise and maintaining dry grip performance.

Recently, as automobiles become quieter tyre noise has come to contribute to a higher degree to the total noise level of an automobile, and its reduction is demanded. Such noise reduction is specifically desired in a range around 1 kHz which forms the peak frequency of tyre noise, and sound due to a columnar resonance generated by the circumferential grooves is one of the main sound sources in such high frequency range.

On the other hand, in order to maintain the wet grip performance, the tread of a tyre is generally provided with plural circumferential grooves continuously extending in the circumferential direction of tyre.

In such a tyre, when it is in contact with the ground, a kind of air column is formed by the road surface and the circumferential groove. Then a sound of specific wavelength, which is double the wave length of the air column is caused by airflow within the column during running.

Such a phenomenon is referred to as columnar resonance, and provides the main source of noise at 800 to 1.2 kHz. The wavelength of the columnar resonance sound is approximately constant to give a constant frequency regardless of the tyre's speed, and thus increases sound inside and outside an automobile. Incidentally, since this noise around 1 kHz is a sound easily heard by the human ear, the increase of noise with this frequency greatly influences tyre noise performance.

In order to prevent the columnar resonance, although reduction of the number or volume of the circumferential grooves is known, such reductions lead to a lower wet grip performance.

On the other hand, although the wet grip performance can be increased contrarily by increasing the number or volume of circumferential grooves, a simple increase causes reduction of the dry grip performance, because the ground-contact area is reduced. Also, this causes a reduction of steering stability as the rigidity of the tread pattern is reduced, in addition to the increase in tyre noise.

Conventionally, a tyre's performance has been adjusted by sacrificing one or more performances factors.

It is hence a primary object of the invention to provide a pneumatic tyre having improved wet grip performance without loss of dry grip performance or steering stability, and yet having reduced noise.

According to the present invention, a pneumatic tyre comprises a tread part having two circumferential grooves continuously extending in the circumferential direction on either side of the tyre's equator so as to divide the tread part into a pair of shoulder parts, which are located outside outer bottom edges of the circumferential grooves in the axial direction of tyre, and a central part, which is located between inner bottom edges of the circumferential grooves in the axial direction of tyre, characterised in that the central part has a surface comprising successive convex curves composed of a pair of inner groove walls extending inside, in the axial direction of tyre, along a curve convex outwardly in the radial direction from the inner bottom edges of the circumferential grooves and a central ground-contacting surface smoothly connected between the pair of the inner groove walls, the central ground-contacting surface is substantially in contact with a virtual tread line between outer surfaces of the shoulder parts, the circumferential grooves have a groove width GW being in a range of 35 mm or more, and when the tyre is mounted on a regular rim, inflated to regular internal pressure and normal load is applied, a shoulder ground-contacting area Fs1 where one of the shoulder parts contacts with the ground has a width SW1 in the tyre's axial direction which is larger than a width SW2 in the tyre's axial direction of a shoulder ground-contacting area Fs2 where the other one of the shoulder parts contacts the ground.

Preferably the groove width GW1 of one circumferential groove is smaller than the groove width GW2 of the other circumferential groove. Also the width SW2 of the shoulder ground contacting area FS1 may be smaller than the width CW in the tyre's axial direction of the ground-contacting area Fc of the central part.

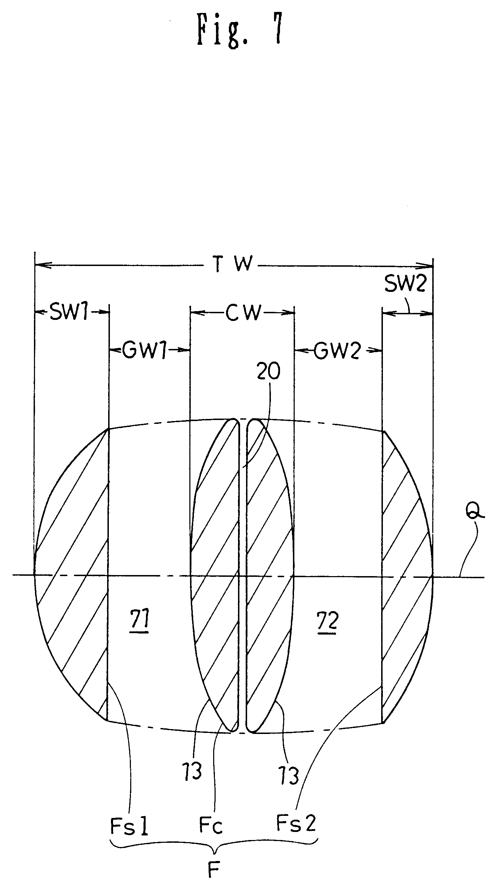

In the invention, the groove depth of each circumferential groove gradually increases towards the outside in the tyre's axial direction because the surface of the central part is formed by a convex curve, in addition, the circumferential grooves have a wide groove width GW larger than 35 mm. As a result, the draining performance is increased, and the wet grip performance is improved so as to reduce the hydroplaning phenomenon. The circumferential groove, also, forms widened parts as shown in Fig. 7 at the front and back of a ground-contacting centre Q, when the tyre comes in contact with the ground. These widened parts prevent columnar resonance and effectively reduce the tyre noise. The convex form of the central part contributes to a raising of the stiffness of the central part. Still more, since the width SW1 of one shoulder ground-contacting area Fs1 of one shoulder part is set greater than the width SW2 of the other shoulder ground-contacting area Fs2 of the other shoulder part, by installing the former shoulder towards the outside of the car body, the tread stiffness of the outer side of the car body is greater, and a strong lateral force can be exhibited in a limited ground contact area and the dry grip performance is improved, so that the straight running stability and turning stability may be enhanced.

An embodiment of the present invention will now be described, by way of example, referring to the attached diagrammatic drawings, in which:

Fig. 1 is a sectional view showing an embodiment of the invention;

Fig. 2 is a enlarged sectional view showing a central part configuration;

Fig. 3(A) is an enlarged partial sectional view for explanation of groove bottom ends;

Fig. 3(B) is an enlarged partial sectional view for explanation of groove bottom ends;

Fig. 4 is a partial flat view showing a tread pattern;

Fig. 5 is a diagram showing the relation between the total groove width ratio and cornering power;

Fig. 6 is a graph showing the relation between the total groove width ratio and hydroplaning-inducing speed;

Fig. 7 is a plan view showing a ground-contacting tread area of an embodiment of the invention when a normal load is applied;

Fig. 8 is a diagram showing a result of a noise test;

Fig. 9 is a sectional view of a tyre showing another example of a central part configuration;

Fig. 10 is a sectional view of a tyre showing still another example of a central part configuration;

Fig. 11 is a sectional view of a tyre showing yet another example of a central part configuration;

Fig. 12 is a graph showing a result of frequency analysis of tyre noise in an embodiment of the invention;

Fig. 13 is a partial flat view of a tread pattern showing another example of circumferential grooves and circumferential radiation grooves; and

Fig. 14 is a sectional view showing a tread profile of a conventional tyre.

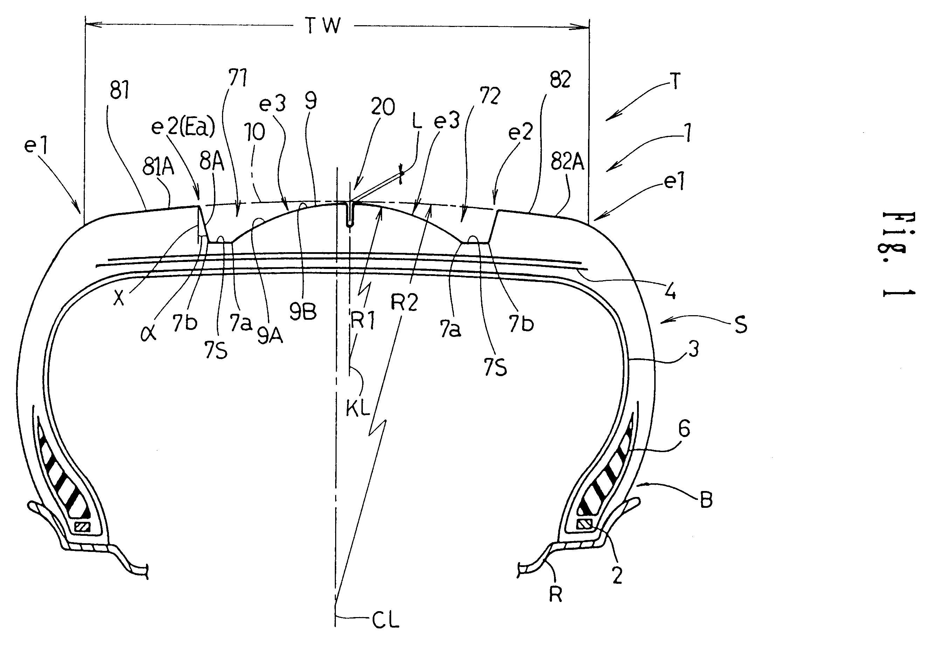

Fig. 1 shows a tyre 1 of the invention in its normal state mounted on its regular rim R and inflated with regular internal pressure. The regular rim is the rim officially approved for the tyre by for example JATMA (Japan), TRA (USA), ETRTO (Europe) and the like; the regular internal pressure is the maximum air pressure for the tyre officially specified in Air-pressure/Max.-loads Table by for example JATMA, TRA, ETRTO and the like; and a normal load is the maximum load for the tyre officially specified in Air-pressure/Max.-loads Table by for example JATMA, TRA, ETRTO and the like.

The tyre 1 comprises a pair of bead parts B each having a bead core 2, sidewall parts S extending from the bead parts B outwardly in the radial direction of tyre, and a tread part T linking their outer ends. The aspect ratio is between 0.4 and 0.6 to provide a low aspect tyre suitable for passenger vehicles.

(Aspect ratio = sectional height / tyre width.)

A radial carcass 3 extends between the bead parts B. The edges of the carcass 3 are folded back from the inside to the outside around the bead core 2, and a belt or breaker layer 4 is provided above the carcass 3 and radially inwards of the tread part T.

In addition, a rubber bead apex 6 extending radially outward from each bead core 2 is provided between the main part of the carcass 3 and the folded back part thereof so as to maintain the shape and rigidity of the bead part B.

The belt layer 4 comprises plural belt plies of cords aligned at an angle of 15 to 30 degrees to the tyre equator CL and coated by topping rubber. The belt cords have a high tensile strength, such as steel or aromatic polyamide, and are arranged to cross to each other between the belt plies. For the carcass cords, in the case of a tyre for passenger vehicles, such organic fibre cords as nylon, rayon or polyester may be generally employed.

The tread part T has two wide circumferential grooves 71, 72, which are positioned one at either side of the tyre's equator CL and these continuously extend substantially in the circumferential direction so that the tread part T is divided into a pair of shoulder parts 81, 82 and a central part 9. The shoulder part 81, 82 are defined as the regions outside an outer bottom edge 7b of the circumferential grooves 71 or 72 in the axial direction of tyre. The central part 9 is defined as the region between the inner bottom edges 7a of the circumferential grooves 71, 72 in the axial direction of tyre. The circumferential grooves 71, 72 are positioned asymmetrically about the tyre's equatorial surface. The circumferential grooves 71, 72 have the same groove depth D to each other, and this groove depth D is set in a range of 4 to 8% of the ground-contacting width TW of the tread such as 7.5 to 15.0 mm, preferably 8.4 mm for a tyre of 205/55R15 in size.

The central part 9 has a surface with a smooth convex curve composed of a pair of inner groove walls 9A extending inwards in the axial direction of tyre along a curve convexed outwardly in the radial direction of tyre from the inner bottom edges 7a of the grooves 71, 72 and a central ground-contacting surface 9B smoothly connected between the inner groove walls 9A, 9A.

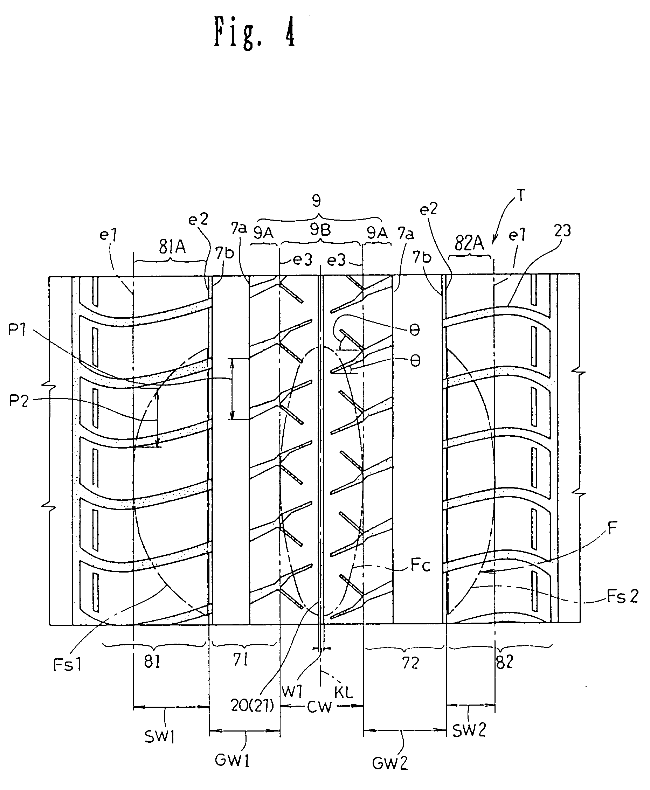

Incidentally, when a normal load is applied to the tyre in the normal state, as shown in Fig. 4, a ground-contacting tread area F where the tread T contacts the ground is obtained. The ground-contacting tread area F has a ground-contacting area Fc for the central part 9 having a thin elliptic form and ground-contacting areas Fs1, Fs2 for the shoulder parts 81, 82 having a semicircular form.

The central ground-contacting surface 9B is defined as that part of the tread surface between the circumferential lines e3, e3 passing the axially outer edge of the ground-contacting area Fc. Each of the shoulder ground-contacting surfaces 81A, 82A is defined as that part of the tread surface between the circumferential lines e1, e2 passing the axially outer and inner edges of the ground-contacting areas Fs1, Fs2.

The ground-contacting tread width TW is defined as the length between the circumferential lines e1, e1. Widths SW1, SW2 of the shoulder ground-contacting areas Fs1, Fs2, that is, widths of the shoulder ground-contacting surfaces 81A, 82A are also defined as the lengths between the circumferential lines e1, e2. Each of the shoulder ground-contacting surfaces 81A, 82B is crossed by an outer groove wall 8a extending radially outside from the outer bottom edge 7b of each of the grooves 71, 72, thus, the circumferential grooves 71, 72 are defined by the groove bottom 7S and inner and outer groove wall 9A, 8A. Groove widths GW1, GW2 of the circumferential grooves 71, 72 are defined as the lengths between the circumferential lines e2, e3. The width CW of the ground-contacting area Fc, that is, the width of the central ground-contacting surface 9B is defined as the length between the circumferential lines e3, e3.

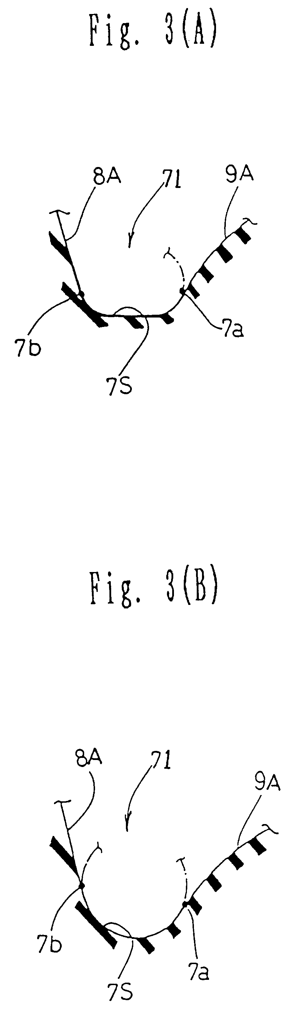

The groove bottom edges 7a, 7b may be formed, when the groove bottom 7S is approximately a flat surface as in the embodiment, as bending points between the groove bottom 7S and groove walls 8A, 9A. When the groove bottom 7S is a concave surface as shown in Figs. 3(A) and 3(B), the groove bottom edges 7a, 7b may be formed as bending points or inflection points.

The central ground-contacting surface 9B is substantially in contacting with a virtual tread line 10 connected between the shoulder ground-contacting surfaces 81A, 82A.

Here, the expression "substantially in contact" means that the minimum distance L between the central ground-contacting surface 9B and the virtual tread line 10 is within 2% of the ground-contacting tread width TW. If it is 2% or more, because the difference between the ground-contacting pressures of the shoulder part and central part then is increased, the grip performance is reduced, and the wear resistance is affected. Thus, it should be preferably 1% or less, more preferably 0.5% or less.

Additionally, the virtual tread line 10 is defined as the arcuate curve of a single radius of curvature which extends between the axially inner edges Ea of the shoulder ground-contacting surfaces 81A, 82B and is in contact with tangent lines to the shoulder ground-contacting surfaces 81A, 82B at the axially inner edges Ea thereof. When the tangent is approximately parallel, the virtual tread line 10 is formed as a straight line connecting between the inner edges Ea, Ea.

In the invention, the convex central part 9 provides a sub-tread having a radius of curvature which is comparatively small and a width sufficiently narrower than the tyre's width in the centre of tyre, thus, the hydroplaning phenomenon is prevented, and the wet grip performance is increased.

By reducing the radius of curvature of the central part 9, specifically that of the central ground-contacting surface 9B, the water draining performance to outside in both directions is increased, and the water clearing effect on a wet road is enhanced.

Incidentally, in the case where the radius of curvature R2 of the shoulder ground-contacting surfaces 81A, 82A is also reduced, the grip performance on a dry road and steering stability in cornering are reduced due to a reduction of ground contact area. Therefore, the radius of curvature R2 should be comparatively large, preferably 3 or more times the ground-contacting tread width TW. It is also allowable for the shoulder ground-contacting surfaces 81A, 82A to be approximately a straight line parallel with the tyre's axis. The shoulder parts 81, 82 are provided with an arcuate part with a radius of curvature smaller than the radius of curvature R2 in the vicinity of the axially outer edge of the ground-contacting tread area F.

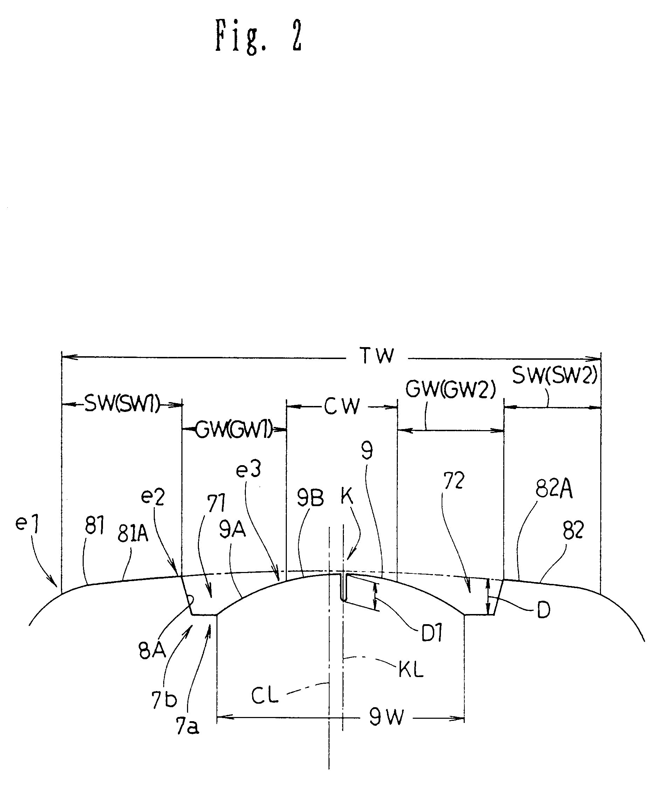

Figs. 1 and 2 show an example with the surface of the central part 9 formed by an arc with a radius of curvature R1. The radius of curvature R1 is sufficiently smaller than the radius of curvature R2, and the convex curve of the central part 9 is inscribed with the virtual tread line 10 in the example. In Fig. 1, the distance L is drawn on purpose to explain the phrase "substantially in contact". In the embodiment, the radius of curvature R1 has its centre on a plane KL parallel with the tyre equatorial plane CL passing at the contact point K between the central part 9 and the virtual tread line 10. The central part 9 is symmetrical about the plane KL remote from the tyre equatorial plane CL.

It is also preferable that the radius of curvature R1 is set within a range of 0.4 to 1.5 times, more preferable 0.45 to 0.55 times the ground-contacting tread width TW. If it is less than 0.4 times, The width CW of the central ground-contacting surface 9B is too small, and the dry grip performance tends to be significantly reduced. If it is more than 1.5 times, the draining effect is insufficient, and the wet grip performance is inferior.

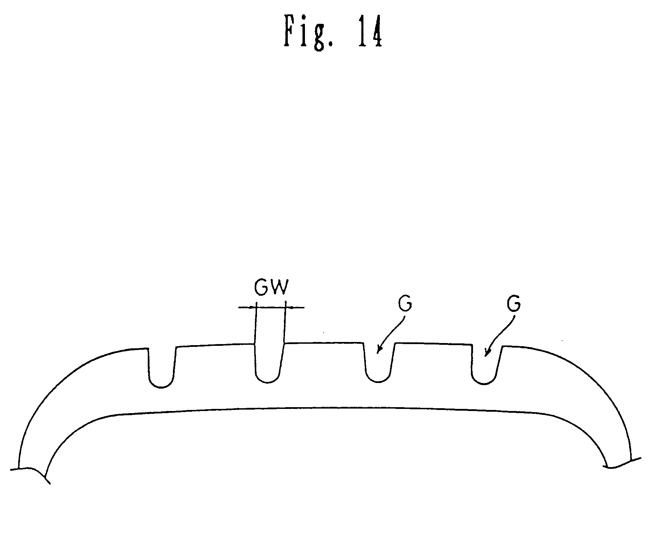

Furthermore, in the shoulder parts 81, 82, it is desirable that the outer groove walls 8A of the grooves 71, 72 are formed by a relatively steep and non-arcuate line such as a straight line, at an angle $\alpha$ of 0 to 40 degrees, preferably 5 to 25 degrees to a line X radial of tyre, so that an edge effect on a road surface is provided at the inner edges Ea of the shoulder parts 81, 82 with a high ground-contacting pressure to help maintain the dry grip performance by increasing lateral force, and thereby cornering power. The outer groove wall 8A may be formed as a convex curve similar to the inner groove wall 9A, or extended in a zigzag, as shown in Fig. 14, to increase traction.

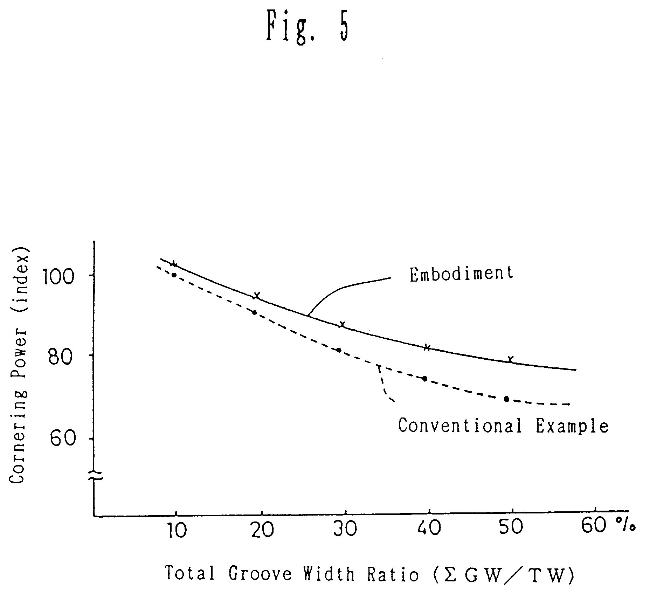

Regarding the circumferential grooves 71, 72, it was found that a total groove width ratio 2GW/TW of a total groove width 2GW of the circumferential grooves 71, 72 to the ground-contact tread width TW affects the cornering power and wet grip performance. Fig. 5 shows the result of measuring the cornering power of a 205/55 R15 tyre with a central part in the form of a single arc as shown in Fig. 1 and a conventional tyre with four circumferential grooves G as shown in Fig. 14 by changing the total groove width ratio $\Sigma$GW/TW. For the total groove width ratio, a value of the ratio 2GW/TW was employed for the embodiment, and a value of the ratio ($\Sigma$GW)/TW for the conventional example. The cornering power was measured on a drum tester in the normal state. It was shown that the embodiment shows a higher value in comparison with the conventional tyre. This is considered to be because, when the total groove width ratio defined as above is constant, the inner groove wall 9A of the convex curve contributes to increasing the tyre's lateral rigidity.

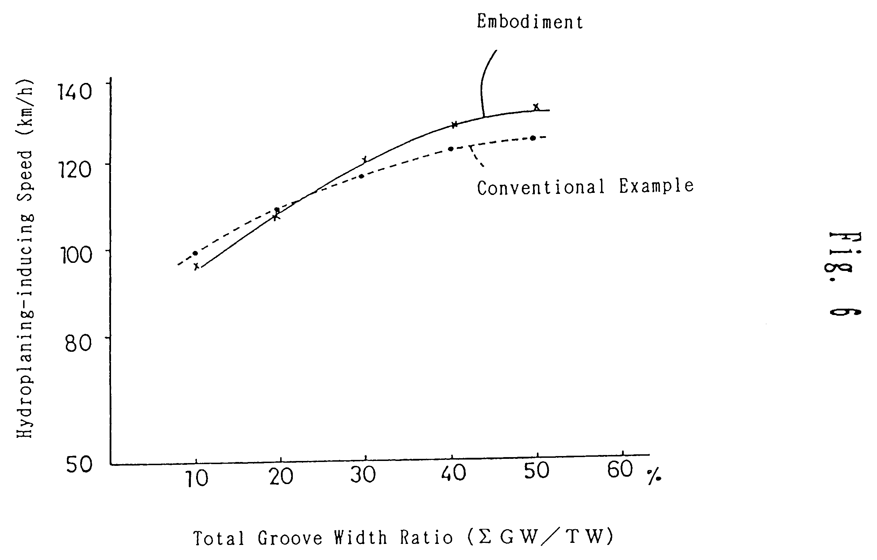

Fig. 6 shows the result of measuring, in a similar manner, the hydroplaning inducing speed. It was shown that the hydroplaning phenomenon occurred at a higher speed in the embodiment, compared to the conventional tyre. This is considered to be because the circumferential grooves 71, 72 form widened parts 13 as shown in Fig. 7 at the front and the back of the ground-contacting centre Q, when the tyre comes in contact with the ground. The widened part 13 increases the draining performance. Incidentally, in the case where the value of the ratio ($\Sigma$GW)/TW exceeds 50%, the increasing of the inhibitory effect of hydroplaning phenomenon is not expected as shown in Fig. 6, and the cornering power becomes insufficient. Therefore, the value of the ratio ($\Sigma$GW)/TW is preferably less than 50%, more preferably less than 45%.

Also, the widened part 13 prevents occurrence of the columnar resonance in the circumferential grooves 71, 72, thereby providing the reduction of tyre noise.

To further enhance the inhibitory effect of air column resonance, the groove widths GW1, GW2 of the circumferential groove 71, 72 must be 35 mm or more, preferably 40 mm or more. If more than 50 mm, however, the effects are hardly changed.

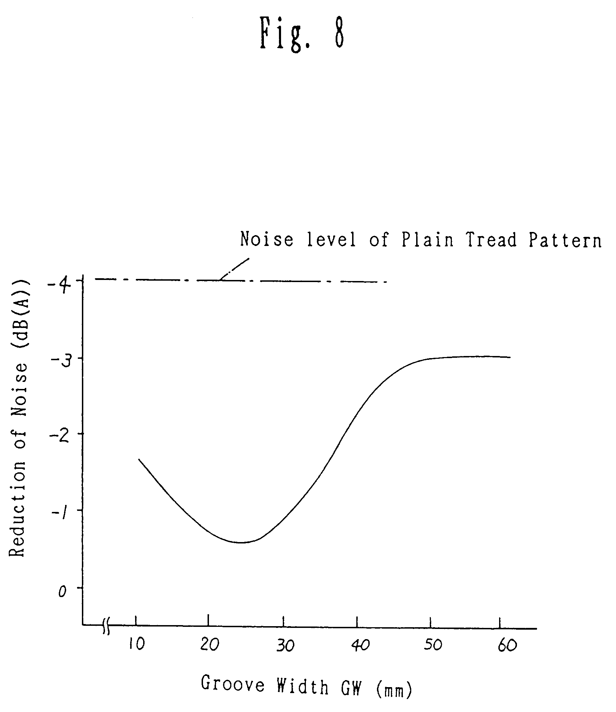

Fig. 8 shows measurements of pass-by noise for varying groove widths GW of the circumferential grooves 71,72 at a fixed groove depth. The pass-by noise reaches a peak at a groove width GW of 25 mm, and then drops suddenly, and an excellent low noise characteristic is noted at 35 mm and over. Nevertheless, although the tyre of the invention has a high cornering power as shown in Fig. 5, increase in groove width GW causes a decrease in ground contact area, thereby lowering the dry grip performance and steering stability.

In the invention, therefore, in order to heighten the steering stability and dry grip performance whilst maintaining the excellent low noise performance and hydroplaning resistance, the tread surface is formed asymmetrically, by defining the width SW1 of one shoulder ground-contacting surface 81A to be greater than the width SW2 of the other shoulder ground-contacting surface 82A.

Thus by installing the tyre with the broader shoulder part 81 directed outwardly of the car, the tread stiffness outwards of the car is increased, and a strong lateral force can be generated, so that the steering stability, in particular, the turning stability is enhanced. In this invention, the width SW2 of the other shoulder ground-contacting surface 82A inwards of the car is preferred to be 0.09 times or more the ground-contacting tread width TW, for example, 15 mm or more in the tyre size 205/55R15. If smaller than 0.09 times, the ground contacting pressure of the narrower shoulder ground-contacting surface 82A increases unevenly, and an uneven wear occurs.

Also, in the embodiment, the width CW of the central ground-contacting surface 9B is set to be greater than the width WS2, while the groove width GW1 of the circumferential groove 71 adjacent to the broader shoulder ground-contacting surface 81A is made smaller than the grove width GW2 of the circumferential groove 72 adjacent to the narrower shoulder ground-contacting surface 82A. This is because the stability upon ground-contact is enhanced by broadening the width CW of the central ground-contacting surface 9B by CW > SW2. To the contrary, if CW $\leq$ SW2, the straight running performance is particularly lowered, and uneven wear is likely to occur in the shoulder ground-contacting surface 82A. Hence, preferably, the width CW should be about 1.4 to 2.0 times, more preferably 1.4 to 1.7 times the width SW2. If the groove width GW1 is more than the grove width GW2, the central part 9 is shifted excessively to the inner side of the car body, and thereby the lateral force decreases, the asymmetricity becomes excessive, and the steering stability is lowered and other demerits are likely to occur.

Incidentally, to maintain the dry grip performance, wear resistance and steering stability, the width CW is preferably set to be about 5 to 40 % of the ground-contacting tread width TW, or more preferably 15 to 35 %. The width 9W of the central part 9, or the distance between the inner groove bottom edges 7a is preferably set about 40 to 55 % of the ground-contacting tread width TW.

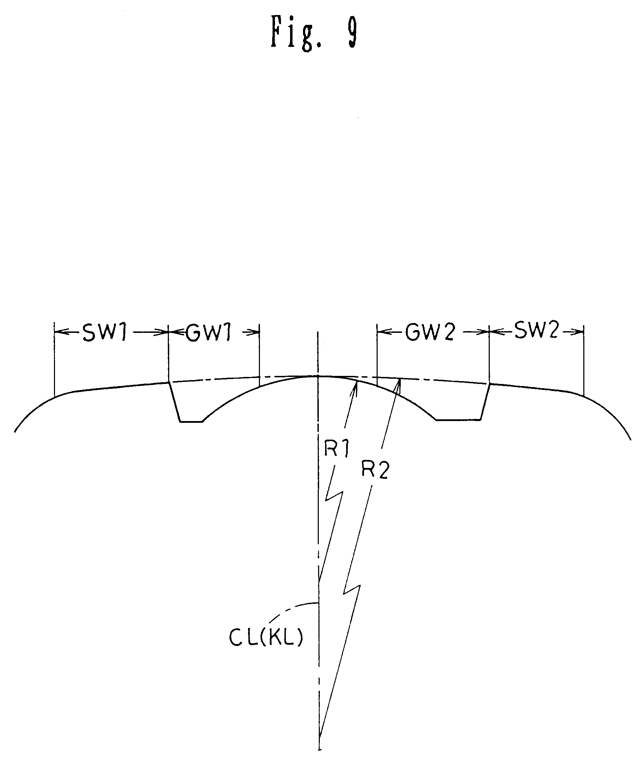

In the embodiment, the plane KL of the central portion 9 is disposed away from the tyre equatorial plane CL, but, as shown in Fig. 9, by setting the plane KL in the coincidence with the tyre equatorial plane CL and varying the right and left groove widths GW1, GW2, the width SW1 of one shoulder ground-contacting surface 81A may be made greater than the width SW2 of the other shoulder ground-contacting surface 82A.

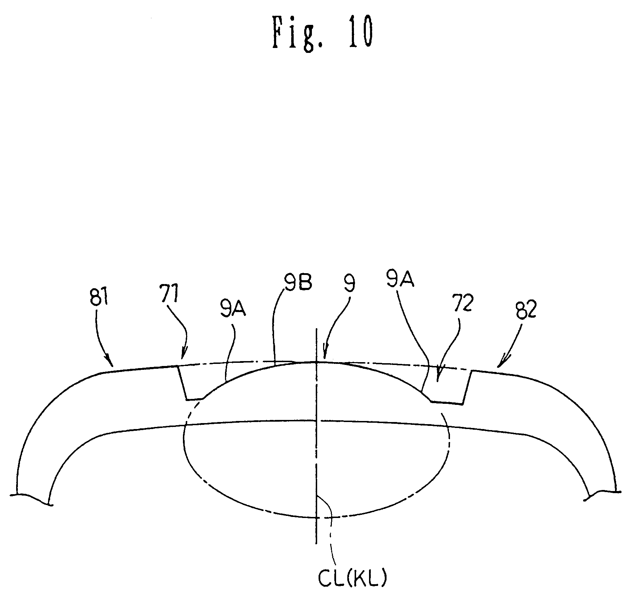

Meanwhile, as shown in Fig. 10, the surface of the central part 9 may be formed as an elliptic shape or a curve approximating to an ellipse.

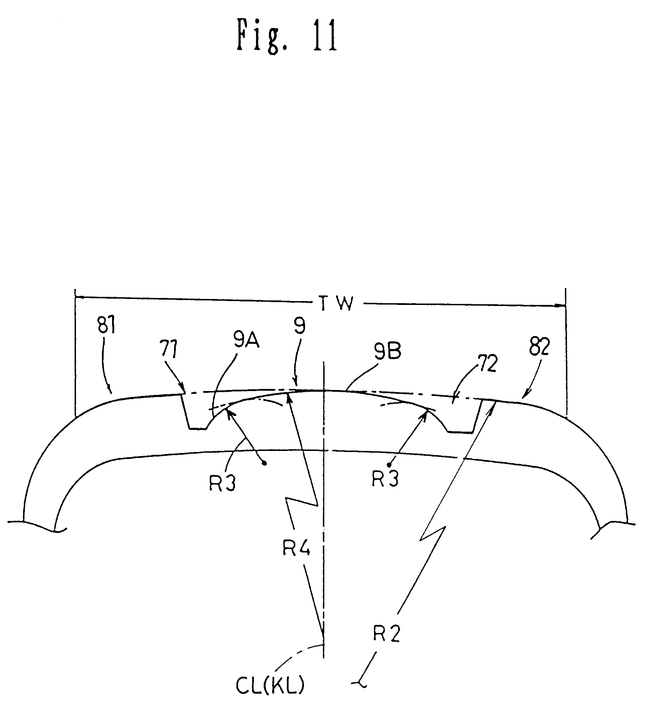

Fig. 11 shows that the groove wall 9A and the central ground-contacting surface 9B have different radii of curvature R3, R4. The radius of curvature R3 is less than the radius of curvature R4 of the central ground-contacting surface 9B and the radius of curvature R2 of the shoulder ground-contacting surface 81A, 82A, respectively, and the lowest limit thereof is preferably 5% or more of the ground-contacting tread width TW. If it is less than 5%, the draining effect tends to be insufficient. The highest limit is at a value identical to the radius of curvature R4, and then the central surface is formed by a single arc. The radius of curvature R4 can be close to the radius of curvature R2 as far as the wet grip performance is not inferior. In addition, in order to decrease the emission noise towards the outside of the car, the radius of curvature R3 of one inner groove wall 9A directed outward of the car may be set greater than that of the other inner groove wall 9A.

In the embodiment, also, the central part 9 is provided with a radiation groove 21 including at least a circumferential radiation groove 20 for heat release as shown in Fig. 4.

The radiation groove 21 comprises, in the embodiment, a circumferential radiation groove 20 and lateral radiation grooves 22. The circumferential radiation groove 20 is formed as a narrow groove extending continuously substantially along the central plane KL. The radiation groove 20 is capable of proving a heat radiation effect whilst maintaining the pattern rigidity, by setting the groove depth D1 thereof at 0.4 to 0.9 times the groove depth D of the circumferential groove 7, and the groove width W1 at 5 mm or less. If the groove width W1 is more than 5 mm, and the groove depth D1 is more than 0.9 times the groove depth D, then columnar resonance is caused. If the groove depth D1 is less than 0.4 times the groove depth D, the heat radiation effect is insufficient.

The lateral radiation groove 22 extends from its inner end spaced from the circumferential radiation groove 20 toward the outside in the axial direction of tyre at an inclination θ of 10 degrees or more to the axial direction of tyre, and an outer end thereof opens into the circumferential groove 7.

Thus, because the lateral radiation groove 22 is spaced from the circumferential radiation groove 20, the rigidity of the central part 9 is maintained, and the steering stability is assured.

The groove depth D2 of the lateral radiation groove 22 is similarly 0.4 to 0.9 times the groove depth D. If the groove depth D2 is more than 0.9 times the groove depth D, and the inclination θ is less than 10 degrees, then the pitch noise of the lateral radiation groove 22 is excessively high. If the groove depth D2 is less than 0.4 times the groove depth D, a sufficient heat radiation effect cannot be expected.

In the circumferential and lateral radiation grooves 20 and 22, an angle established by a groove wall in the grooves 20, 22 and a normal on the tread surface, that is, the inclination gradient of the groove wall is set at 15 degrees or less, more preferably 5 degrees or less, respectively, and a dimensional change of the radiation groove 21 due to wear of the tyre is thereby controlled.

In the embodiment, a shoulder groove 23 is additionally formed in the shoulder part 8. Each shoulder groove 23 is an open groove with an inner end thereof opening in the circumferential groove 7 and an outer end in the tread end. Thus, by opening it in the circumferential groove, the heat radiation effect is further increased, increase of temperature in the shoulder groove 8 is significantly reduced, and the draining performance is enhanced.

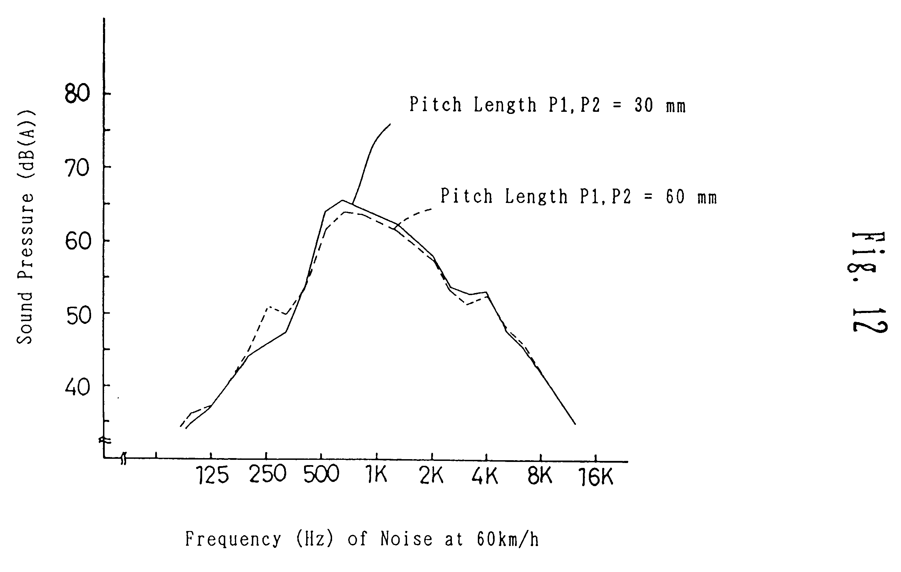

An average pitch length of a lateral groove in the circumferential direction of tyre is generally about 30 mm, and the resultant primary frequency at a speed of 60 km/h, for example, is 500 to 600 Hz, thus, showing a coincidence with a frequency of noise peak in a tyre with a tread profile having the convex central part 9, as shown in Fig. 12. Therefore, in the embodiment, the average pitch length P1 of the lateral radiation groove 22 and the average pitch length P2 of the shoulder groove 23 are preferably set at 40 mm or more, respectively, so that the primary pitch frequencies of the grooves 22, 23 are different from the noise peak.

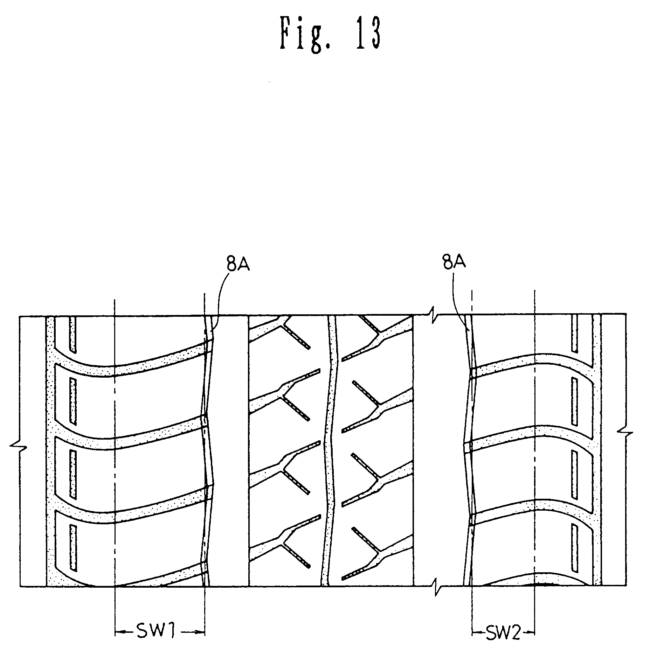

Fig. 13 shows another example of radiation grooves 21 and the circumferential grooves 7. The groove walls of the circumferential radiation grooves 20 and the groove wall 8A of the circumferential groove 7 may be formed as a zigzag.

Example

A tyre of 255/40 ZR17 in size was produced according to specifications shown in Table 1, and measured for pass-by noise, hydroplaning-inducing speed, straight running stability, cornering stability and wear durability. The results of the measurement were compared and shown in the Table. The tyres were tested and measured in the state mounted on its regular rim R and inflated with regular internal pressure.

[Table 1]

| | Embodiment | | | | | | Comparative |
|---|---|---|---|---|---|---|---|
| | 1 | 2 | 3 | 4 | 5 | 6 | 1 |
| Ground-Contacting Tread Width TW(mm) | 200 | 200 | 200 | 200 | 200 | 200 | 200 |
| Circumferential Groove | | | | | | | |
| • Number of Grooves | 2 | 2 | 2 | 2 | 2 | 2 | 2 |
| • Groove Width GW1(mm) | 40 | 40 | 48 | 35 | 40 | 45 | 40 |
| • Groove Width GW2(mm) | 40 | 40 | 48 | 45 | 50 | 35 | 40 |
| • Total Groove Width Ratio 2GW/TW | 0.40 | 0.40 | 0.48 | 0.45 | 0.45 | 0.45 | 0.40 |
| • Groove Depth D(mm) | 10 | 10 | 10 | 10 | 10 | 10 | 10 |
| Shoulder Part | | | | | | | |
| • Width SW1(mm) | 40 | 45 | 40 | 40 | 45 | 40 | 35 |
| • Width SW2(mm) | 30 | 25 | 14 | 30 | 35 | 30 | 35 |
| Central Part | | | | | | | |
| • Width CW(mm) | 50 | 50 | 50 | 50 | 30 | 50 | 50 |
| Radius R1(mm) | 85 | 85 | 85 | 85 | 85 | 85 | 85 |
| Radius R2(mm) | 520 | 520 | 520 | 520 | 520 | 520 | 520 |
| Pass-by Noise (dB(A)) | 71.1 | 71.3 | 70.4 | 71.5 | 70.7 | 71.5 | 71.0 |
| Hydroplaning-inducing Speed *1 | 99 | 97 | 120 | 99 | 110 | 99 | 100 |
| Straight Running Stability *2 | 3 | 3 | 3 | 3 | 2.5 | 3 | 3 |
| Cornering Stability *2 | 3.5 | 4.0 | 3.5 | 4.0 | 3.5 | 3.5 | 3 |
| Wear Durability *1 | 97 | 85 | 70 | 99 | 75 | 98 | 100 |

*1 Indicated as the index with the Comparative 1 taken as 100. The greater figure means the better performance.
*2 Indicated as the index 5 with the Comparative 1 taken as 3. The greater figure means the better performance.

## Claims

1. A pneumatic tyre comprising a tread part having two circumferential grooves (71,72) continuously extending in the circumferential direction on either side of the tyre's equator (CL) so as to divide the tread part (T) into a pair of shoulder parts (81,82), which are located outside outer bottom edges (7a) of the circumferential grooves (71,72) in the axial direction of tyre, and a central part (9), which is located between inner bottom edges of the circumferential grooves in the axial direction of tyre, characterised in that the central part (9) has a surface comprising successive convex curves composed of a pair of inner groove walls (9A) extending inside, in the axial direction of tyre, along a curve convex outwardly in the radial direction from the inner bottom edges (7a) of the circumferential grooves (71,72) and a central ground-contacting surface (9B) smoothly connected between the pair of the inner groove walls (9A), the central ground-contacting surface (9B) is substantially in contact with a virtual tread line (10) between outer surfaces of the shoulder parts (81,82), the circumferential grooves (71,72) have a groove width GW in a range of 35 mm or more, and when the tyre is mounted on a regular rim, inflated to regular internal pressure and normal load is applied, a shoulder ground-contacting area Fs1 where one of the shoulder parts (81) contacts the ground has a width SW1 in the tyre's axial direction which is larger than a width SW2 in the tyre's axial direction of a shoulder ground-contacting area Fs2 where the other one of the shoulder parts (82) contacts the ground.

2. A pneumatic tyre according to claim 1, characterised in that a groove width GW1 of the circumferential groove adjacent to said one of the shoulder parts is smaller than a groove width GW2 of the circumferential groove adjacent to said other one of the shoulder parts.

3. A pneumatic tyre according to claim 1 or 2, characterised in that said width SW2 of the shoulder ground-contacting area Fs2 is smaller than the width CW in the tyre's axial direction of a ground-contacting area Fc where the central part (9) contacts with the ground.

**Patentansprüche**

1. Ein Luftreifen mit einem Laufflächenteil mit zwei Umfangsnuten (71, 72), die sich kontinuierlich in der Umfangsrichtung auf beiden Seiten des Reifenäquators (CL) erstrecken, um den Laufflächenteil (T) in ein Paar von Schulterteilen (81, 82), die sich außerhalb äußerer Bodenkanten (7a) der Umfangsnuten (71, 72) in der axialen Richtung des Reifens befinden, und einen zentralen Teil (9) zu teilen, der sich zwischen inneren Bodenkanten der Umfangsnuten in der axialen Richtung des Reifens befindet,
dadurch gekennzeichnet,
daß der zentrale Teil (9) eine Oberfläche mit sukzessiven konvexen Krümmungen aufweist, die aus einem Paar von inneren Nutwänden (9A), die sich innen, in der axialen Richtung des Reifens, längs einer konvexen Krümmung nach außen in der radialen Richtung von den inneren Bodenkanten (7a) der Umfangsnuten (71, 72) aus erstrecken, und einer zentralen Bodenkontaktfläche (9B) bestehen, die zwischen dem Paar der inneren Nutwände (9A) glatt verbunden ist, daß sich die zentrale Bodenkontaktfläche (9B) mit einer virtuellen Laufflächenlinie (10) zwischen äußeren Oberflächen der Schulterteile (81, 82) im wesentlichen in Kontakt befindet, daß die Umfangsnuten (71, 72) eine Nutbreite GW in einem Bereich von 35 mm oder mehr aufweisen, und daß, wenn der Reifen an einer regulären Felge angebracht ist, auf einen regulären Innendruck aufgepumpt ist und ein normale Last aufgebracht ist, eine Schulterbodenkontaktfläche Fs1, wo sich der eine der Schulterteile (81) in Kontakt mit dem Boden befindet, eine Breite SW1 in der axialen Richtung des Reifens aufweist, die größer als eine Breite SW2 in der axialen Richtung des Reifens einer Schulterbodenkontaktfläche Fs2 ist, wo sich der andere der Schulterteile (82) in Kontakt mit dem Boden befindet.

2. Ein Luftreifen nach Anspruch 1,
dadurch gekennzeichnet,
daß eine Nutbreite GW1 der Umfangsnut benachbart dem einen der Schulterteile kleiner als eine Nutbreite GW2 der Umfangsnut benachbart dem anderen der Schulterteile ist.

3. Ein Luftreifen nach Anspruch 1 oder 2,
dadurch gekennzeichnet,
daß die Breite SW2 der Schulterbodenkontaktfläche Fs2 kleiner als die Breite CW in der axialen Richtung des Reifens einer Bodenkontaktfläche Fc ist, wo sich der zentrale Teil (9) in Kontakt mit dem Boden befindet.

**Revendications**

1. Pneumatique comportant une partie de bande de roulement ayant deux sculptures circonférentielles (71, 72) s'étendant en continu dans la direction circonférentielle de chaque côté de l'équateur du pneumatique (CL) de façon à diviser la partie de bande de roulement (T) en une paire de parties d'épaulement (81, 82), qui se trouvent à l'extérieur des bords inférieure extérieurs (7a) des sculptures circonférentielles (71, 72) dans la direction axiale du pneumatique, et une partie centrale (9), qui se trouve entre des bords inférieurs intérieurs des sculptures circonférentielles dans la direction axiale du pneumatique, caractérisé en ce que la partie centrale (9) a une surface comportant des courbes convexes successives composées d'une paire de parois de sculpture internes (9A) s'étendant vers l'intérieur, dans la direction axiale du pneumatique, le long d'une courbe convexe à l'extérieur dans la direction radiale des bords inférieurs intérieurs (7a) des sculptures circonférentielles (71, 72) et une surface centrale en contact avec le sol (9B) reliant en douceur la paire de parois de sculpture internes (9A), la surface centrale en contact avec le sol (9B) est sensiblement en contact avec une ligne virtuelle de bande de roulement (10) entre des surfaces extérieures des parties d'épaulement (81, 82), les sculptures circonférentielles (71, 72) ont une largeur de sculpture GW qui est dans une plage de 35 mm ou plus, et lorsque le pneumatique est monté sur une jante normale, gonflé à une pression interne normale et qu'une charge normale est appliquée, une surface d'épaulement en contact avec le sol Fs1 où l'une des parties d'épaulement (81) est en contact avec le sol a une largeur SW1 dans la direction axiale du pneumatique qui est plus grande qu'une largeur SW2 dans la direction axiale du pneumatique d'une surface d'épaulement en contact avec le sol Fs2 où l'autre partie d'épaulement (82) est en contact avec le sol.

2. Pneumatique selon la revendication 1, caractérisé en ce qu'une largeur de sculpture GW1 de la sculpture circonférentielle adjacente à la première desdites parties d'épaulement est plus petite qu'une largeur de sculpture GW2 de la sculpture circonférentielle adjacente à ladite autre partie d'épaulement.

3. Pneumatique selon la revendication 1 ou 2, caractérisé en ce que ladite largeur SW2 de la surface d'épaulement en contact avec le sol Fs2 est plus petite que la largeur CW dans la direction axiale du pneumatique d'une surface en contact avec le sol Fc où la partie centrale (9) est en contact avec le sol.

# Fig. 1

# Fig. 2

# Fig. 3(A)

# Fig. 3(B)

# Fig. 4

# Fig. 5

# Fig. 6

# Fig. 7

# Fig. 8

Noise level of Plain Tread Pattern

# Fig. 9

Fig. 10

# Fig. 11

# Fig. 12

Pitch Length P1,P2 = 30 mm

Pitch Length P1,P2 = 60 mm

Frequency (Hz) of Noise at 60km/h

125 250 500 1K 2K 4K 8K 16K

Sound Pressure (dB(A))

80 70 60 50 40

# Fig. 13

Fig. 14